# EUROPEAN PATENT APPLICATION

(11) **EP 0 674 937 A2**
(43) Date of publication of application: **04.10.1995**
(21) Application number: 95103138.4
(22) Date of filing: 06.03.1995
(51) Int. Cl.: B01D 67/00, B01D 69/12, B01D 53/22, B01D 71/02, B01D 71/06, B01D 69/10, B01D 63/06

(54) **Non-porous polymeric membrane on a porous inorganic support**

(30) Priority: 30.03.1994 US 219915
(71) Applicant: CORNING INCORPORATED, Corning, N.Y. 14831 (US)
(72) Inventor: Faber, Margaret K., Corning Inc., Corning, NY 14831 (US); Gadkaree, Kishor P., Corning Inc., Corning, NY 14831 (US)
(74) Representative: Marchant, James Ian

(57) **Abstract**

A method of forming a non-porous polymeric membrane on a porous inorganic support is disclosed. A solution of polymeric material is applied for example by solution deposition, on the surface of a porous inorganic substrate such as a honeycomb structure. The polymeric layer is then precipitated to form a continuous polymeric membrane. Precipitation is carried out using a precipitant or simply by drying the membrane. Part of the polymeric material penetrates into the walls of the porous support to give high adhesion and ensure a continuous membrane.

The resulting membrane support can be used at high pressure differentials and higher throughputs. The stiff, and continuous support prevents any deformation of the polymeric membrane at higher temperatures than possible with polymeric supports.

## Description

### BACKGROUND OF THE INVENTION

The invention relates to a gas separations membrane fabricated by forming a continuous, non-porous polymeric membrane on a porous inorganic support.

Separation membranes can be classified into various categories. For example, they may be organic or inorganic, and porous or non-porous. Inorganic membranes may be metallic, glass, or ceramic. Refractory materials such as metal oxides, as well as carbon, sintered metals, and certain carbides are the most common materials for fabricating porous membranes. Polymer membranes may be organic or inorganic polymer. In addition, polymer membranes may be porous or non-porous.

Porous polymer membranes are used in a variety of industrial, analytical and medical applications. One of the most commonly used method of fabricating such membranes is by precipitation of a porous polymer film from a solution of the polymer in an appropriate solvent. Polymer membranes produced by such methods exhibit high porosity, typically greater than 50%, and as a result, are generally weak. Porous membranes are most often used in ultra- and micro-filtration applications, and in general such membranes are characterized by pore sizes in the range of 0.001-0.1, and 0.1-10 micrometers respectively. To provide high flow rates (flux), very thin membrane layers are desired.

Hitherto, polymeric membranes have been most commonly prepared by supporting the membrane on a polymeric substrate having larger pore size and strength than the membrane. Frequently, the membrane and support are then assembled into a unit for use. The mounting of the membrane on the support, the sealing, and the manifolding required to produce the final unit result in very high fabrication costs for such filtration membranes. Finally, due to the high porosity and thinness of the porous polymeric membrane, its use temperature is significantly lower than the distortion temperature of the solid polymer support. As a result, such membranes can only be used in relatively low temperature applications. Also, such membranes are not suitable for high pressure drop applications and therefore result in lower throughput rates.

While porous membranes may be suitable for some gas separation applications, solid or non-porous membranes are more suitable for gas separations.

To overcome some of the above problems, various methods have been disclosed for fabricating polymeric membranes for gas-gas separations. For example, U.S. Pat. 5,104,425 (Rao et al.) discloses a process of separating gas mixtures using a porous adsorptive membrane (including activated carbon, zeolites, clays, metal oxides, activated alumina and silica gel) supported on a porous substrate. In particular, a carbon membrane is prepared by coating a substrate with a suspension or solution of a polymer and then heating the coating in an appropriate atmosphere to form an activated carbon membrane.

U.S. Pat. 5,114,581 (Goldsmith) discloses a porous polymeric membrane supported on a porous ceramic substrate having plugged cells, for use as a particulate filter.

There continues to be a need for gas separation membranes capable of withstanding high use temperatures and high pressure drops while yielding high throughput rates.

Accordingly, it is the object of the present invention to provide a method of fabricating a membrane which overcomes many of the above problems.

### SUMMARY OF THE INVENTION

Briefly, the invention relates to a method of forming a non-porous polymeric gas separation membrane on a porous inorganic support by first dissolving a polymeric material in a solvent to form a polymeric solution, applying a layer of the polymeric solution to the surface of the porous inorganic support, and then precipitating the polymeric film to form a continuous non-porous polymeric membrane on the support.

In another aspect, the invention relates to a method of separating a gas mixture containing at least two components using a non-porous polymeric membrane supported on a porous inorganic substrate by selectively dissolving at least one component in the polymeric membrane, and diffusing the dissolved component through the membrane.

### BRIEF DESCRIPTION OF THE DRAWINGS

FIG. 1 is micrograph of a polyvinylidene fluoride membrane, formed from a solution of PVDF in acetone having 15% PVDF by weight and precipitated with water, on a titania support;
FIG. 2 is a micrograph of a fractured surface of the membrane of FIG. 1 showing a PVDF film of 2-5 micrometers thickness;
FIG. 3 is a micrograph of the PVDF membrane of FIG. 1, precipitated in a 70/30 water/acetone mixture showing a thinner porous membrane layer;
FIG. 4 is a micrograph of a fractured surface of a PVDF membrane formed from a solution of 10% by weight PVDF in water showing a film thickness in the order of about 1 micrometer;
FIG. 5 is a micrograph of a PVDF membrane formed from a solution of 5% by weight PVDF in water, showing a discontinuous film;
FIG. 6 is a micrograph of a fractured surface of a polysulfone membrane on a titania support formed from a solution of 2% polysulfone by weight in methylene chloride, showing a thin and continuous membrane layer;
FIG. 7 is a micrograph of a fractured surface of a polysulfone membrane on a titania support formed from a solution of 5 weight % polysulfone in methylene chloride, showing a thicker continuous membrane layer;
FIG. 8 is a micrograph of a fractured surface of a polysulfone membrane on a titania support formed from a solution of 7 weight % polysulfone in methylene chloride, showing a film of about 0.2-0.5 micrometers in thickness; and
FIG. 9 is a micrograph of a fractured surface of a silicone rubber membrane on a titania support formed from a solution of silicone rubber and its curing agent (10:1), dissolved in methylene chloride.

### DETAILED DESCRIPTION OF THE INVENTION

While porous membranes may be suitable for some gas separation applications, it is known that solid or non-porous membranes are more suitable for gas separations. Accordingly, one key objective of the present invention is to provide a method of forming a continuous non-porous polymeric membrane for separating gases, which membrane is capable of withstanding higher differential pressure and higher use temperature than has hitherto been feasible with polymeric membranes.

We have found that the above objective can be achieved by forming a thin layer of polymeric material on a porous inorganic support, preferably a ceramic support. Specifically, a polymeric material is dissolved in an appropriate solvent to form a solution of the polymer. A layer of the resulting solution is then applied to the surface of a porous inorganic substrate such as a honeycomb structure. Preferably, some of the solution is allowed to enter and coat the pores of the substrate near the surface. The layer of polymeric material is then precipitated to form a continuous, non-porous polymeric membrane. Depending on the type of filtration application, precipitation of the polymer may be carried out by contacting the polymeric layer with an appropriate precipitant or by drying the polymer. If necessary, the film may be cured at appropriate temperatures to form the continuous membrane layer.

The choice of suitable material for the support or substrate will vary depending on the desired properties such as porosity, pore size, pore size distribution, strength, coefficient of thermal expansion, durability, refractoriness etc. Useful support materials include metals, carbon, glass, ceramic powders, certain carbides, as well as precursors and mixtures of these. Examples of some particularly useful support materials include zirconia, titania, silica, hafnia, cordierite, mullite, spinel, magnesia, forsterite, enstatite, (proto)-enstatite, sapphire, carbides, borides, nitrides, rare earth metal oxides, alkaline earth metal oxides, first, second and third transition metal oxides, talc, clay, alumina, soluble salts, silicone, alkoxides, and mixtures of these. One particularly useful support material is the titania substrate disclosed in co-assigned U.S. Pat. 5,223,318, herein incorporated by reference.

The support may be of any suitable shape, size or configuration depending on the particular application. In one particularly useful embodiment of the present invention, the support is a honeycomb structure having inlet and outlet end faces and a matrix of walls defining a plurality of cells or passageways extending longitudinally and mutually parallel between the end faces of the structure.

The cells or passages may be all open on both end faces as in the so-called flow-through design. Alternatively, the cells may be of the so-called cross-flow design in which certain cells are open on one end face and closed on the other end face such as described in U.S. Pat. 4,416,675 herein incorporated by reference.

In one particularly useful embodiment, the honeycomb support is of the plugged cell design. In this embodiment, the cells of the honeycomb structure are divided into at least two groups such that the cells of one group are open on a first end face of the structure and closed on the second end face, and the cells of the second group are closed on the first end face and open on the second end face as described in greater detail in co-assigned U.S. Pat. 4,420,316, 4,417, 908 and 4,455,180 all herein incorporated by reference. In this application, only a portion of the feed fluid (gas mixture), would be forced by pressure differential to pass through the membranes and thence into the walls. It is believed that the plugged cell configuration may provide advantages for reaction processes and allow for staging of membrane units.

In the honeycomb support embodiment, the membrane is formed on the cell walls of the honeycomb structure all of which are utilized as filters. By forming the membrane directly on the support surface, several benefits are achieved such as fewer processing layers, fewer fabrication steps and more importantly, the resulting membrane provides shorter path lengths for the filtrate. By forming the polymer membrane on a honeycomb support, a filtration unit is produced which has high surface area. The fabrication method is significantly simpler and easier than the methods discussed in the background section above. In the present method, a honeycomb structure is coated with a polymer solution by any known methods such as by dipping, or spraying. Preferably, the polymer solution is applied such that part of the solution penetrates the pores close to the surfaces of the cell walls. After a layer of polymer has been formed on the support, the support having a polymeric layer thereon is either dried or dipped in a precipitant in order to precipitate the polymer and thereby form the polymeric membrane. The resulting membrane layer is very thin and exhibits excellent adhesion thus allowing higher throughputs. A major advantage of the present method is that the membrane is fabricated in few steps and avoids having to first form a thin film which is then mounted and bonded onto a substrate which may then be assembled into a larger unit as is commonly practiced in the prior art.

For some applications, the porous inorganic support may be coated with an intermediate porous inorganic support layer prior to application of the polymer membrane. Preferably, the intermediate support layer is formed so as to exhibit smaller pore diameters and/or narrower pore size distribution than the pores of the primary (i.e., underlying) support in order to facilitate formation of the polymer layer. The intermediate support layer may be formed using the same material as the primary or underlying support or a different material. In addition to the benefits described above, an intermediate layer of a different material may provide the added benefit of providing a surface chemistry that may facilitate formation of the membrane layer.

In the case of a ceramic honeycomb support, the high stiffness of the cell wall and its relatively small median pore size will ensure continuous support as well as good adhesion of the membrane. By small median pore size we mean that the median pore size is less than 20 micrometers. As a result, the ceramic/polymer membrane structure can be used under high use temperature and high differential pressure conditions (i.e., high throughput rates). Another significant advantage of using a honeycomb support is that the amount of separation or filtration can be varied or controlled by varying the cell density (cells/unit area), cell size, wall thickness, open frontal area, and flow direction of the honeycomb structure. Useful honeycomb structures may be fabricated using several methods all of which are well known in the art.

The mean pore size, pore size distribution, and total volume porosity of the support may vary depending on the intended application. For example, average pore sizes can range from about 0.001 to about 20 micrometers, preferably .1-10 micrometers while total volume porosities can range from less than 1% to greater than 50%, preferably 20-50 percent volume porosity. Preferably, the support is also characterized by a narrow pore size distribution, that is, the largest pore sizes in the body are not more than 2 to 5 times the median pore size of the body. Prefereably, the largest pore sizes in the body are not more than 1.5 to 3 times, more preferably, 1.5 to 2 times, the median pore size of the body.

Any polymeric material which can be precipitated to form a continuous non-porous film may be used to fabricate the membrane of the present invention. Examples of polymeric materials which may be used in the method of the invention include cellulose diacetate, cellulose triacetate, cellulose nitrate, polyamides, polyimides, polymeric amines, polyvinylidene difluoride, polyvinylidene fluoride, polysulfone, polyethersulfone, silicone rubber and compatible mixtures of these. Blends of cellulose diacetate and cellulose triacetate are examples of a compatible mixture which may be useful for the membrane of the invention. Three particularly useful polymeric materials, polyvinylidene fluoride, polysulfone, and silicone rubber were used in illustrating the present invention as described in the following examples, without limiting the invention thereof.

### EXAMPLES

### 1. Polyvinylidene Fluoride (PVDF) Membrane

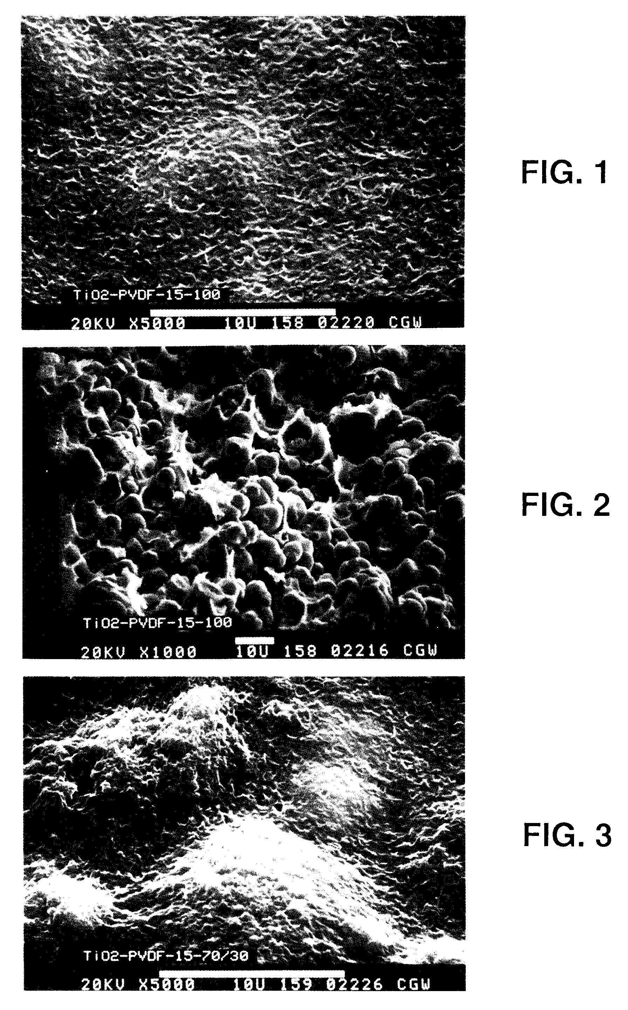

The PVDF was dissolved in acetone at 50 C to form a solution having 15% by weight. A flat titania substrate having mean pore size of about 3.5 micrometers, a narrow pore size distribution, and a total volume porosity of about 40% was dipped in the solution for 3 to 5 seconds, and then dipped in distilled water at 25 C to precipitate the polymer and form a uniform polymeric layer on the support. The resulting membrane layer was about 2-5 micrometers and well adhered (FIG. 2). A fractured piece of the sample shows that some of the polymer was deposited inside the substrate.

When the film was precipitated in a 70/30 mixture of water/acetone, the membrane thickness decreased (FIG. 3).

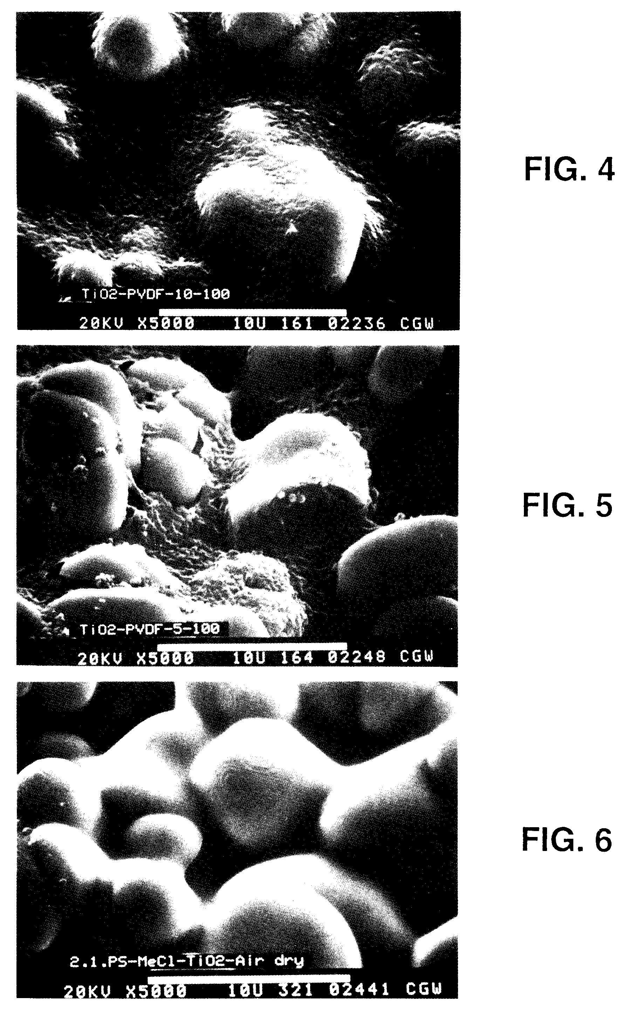

In another experiment, the polymeric film was formed from a 10% PVDF solution. Again, the substrate was uniformly coated, but the film thickness was on the order of about 1 micrometer (FIG. 4).

When the membrane was formed using a 5% PVDF solution, a discontinuous film resulted (FIG. 5).

### 2. Polysulfone Membrane

Polysulfone was dissolved in methylene chloride at ambient temperature to form three solutions having 2, 5 and 7 weight percent polysulfone respectively. Three samples were prepared by applying the three solutions to titania substrates having mean pore size of about 3.5 micrometers, a narrow pore size distribution, and a total volume porosity of about 40%.

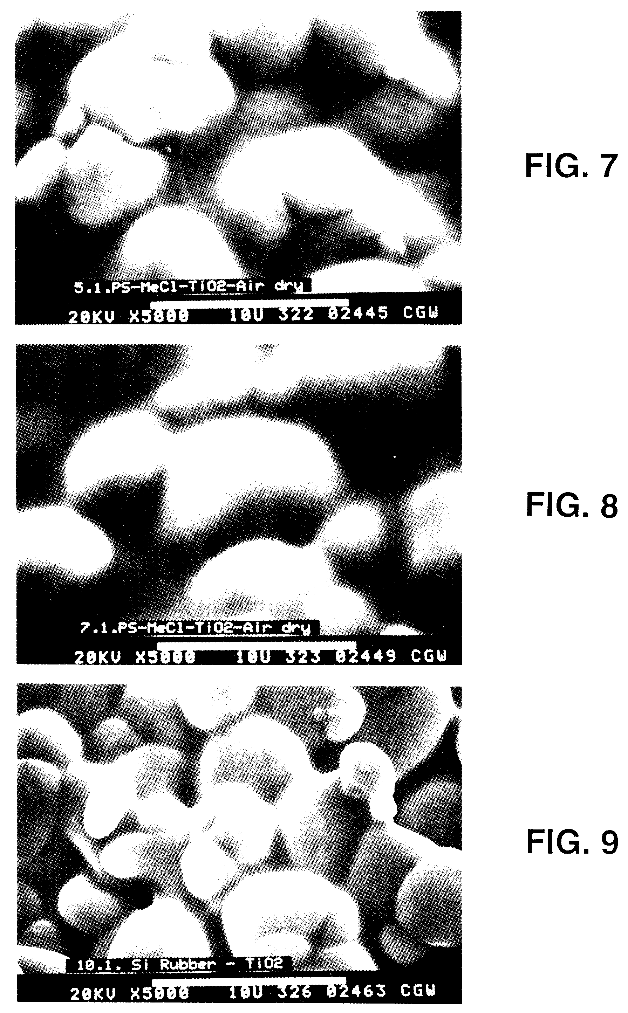

As shown in FIG. 6, the membrane formed using the 2% solution was continuous but very thin. The 5% solution resulted in a thicker continuous membrane layer (FIG. 7). Using the 7% polysulfone solution, a continuous film of about 0.2-0.5 micrometers was obtained (FIG. 8).

All three samples were well adhered to the substrate.

### 3. Silicone Rubber

Silicone rubber and peroxide curing agent in a 10:1 proportion were dissolved in methylene chloride at ambient temperature and deposited on a titania substrate as described in Example 1 above. The samples were allowed to air dry, and the films were then cured at 110 C for 2 hours. The resulting films are illustrated by FIG. 9 which shows a continuous and thin silicone rubber film on a titania substrate.

## Claims

1. A method of forming a non-porous polymeric gas separations membrane on a porous inorganic support, the method comprising the steps of:
dissolving a polymeric material in a solvent to form a polymeric solution;
applying a layer of the polymeric solution to a surface of the porous inorganic support; and
precipitating the layer of polymeric material to form a continuous, non-porous polymeric membrane on the support.

2. The method of claim 1, further comprising the step of curing the polymeric membrane.

3. The method of claim 1, wherein the polymeric material is selected from the group consisting of cellulose diacetate, cellulose triacetate, cellulose nitrate, polyamide, polyimide, polymeric amine, polyvinylidene difluoride, polyvinylidene fluoride, polysulfone, silicone rubber, and mixtures of these.

4. The method of claim 1, wherein the support is a honeycomb structure having inlet and outlet end faces and a matrix of walls defining a plurality of cells or channels extending longitudinally and mutually parallel therethrough between the inlet and the outlet end faces.

5. The method of claim 4, wherein the support also comprises any one or a combination of, a layer of inorganic material, a narrow pore size distribution, a small median pore size, a median pore size in the range of 0.1 to 10 micrometers, a total volume porosity in the range of 20-50 percent.

6. The method of claim 4, wherein the support comprises zirconia, titania, silica, hafnia, cordierite, mullite, spinel, magnesia, forsterite, enstatite, (proto)-enstatite, sapphire, carbides, borides, nitrides, rare earth metal oxides, alkaline earth metal oxides, first, second and third transition metal oxides, talc, clay, alumina, carbon, soluble salts, silicone, alkoxides, and mixtures of these.

7. The method of claim 6, wherein the support consists of any one or a combination of, titania with a mean pore size in the range of 3 - 5 microns, and total volume porosity in the range of 35-45 percent, mullite with a mean pore size in the range of 0.7-0.8 microns total volume porosity of about 45 percent, cordierite with a mean pore size of about 2.5 microns and total volume porosity of about 35 percent.

8. The method of claim 6, wherein the support is a honeycomb body comprising a matrix of cell walls defining a plurality of cells or channels running mutually parallel therethrough between an inlet and an outlet end of the body, the channels being selectively sealed to form two groups of cells, the first group comprising inlet passages which are open at the inlet end and closed at the outlet end, and the second group comprising outlet cells closed at the inlet end and open at the outlet end.

9. The method of any one of the preceding claims, wherein the polymeric membrane comprises cellulose diacetate, cellulose triacetate, cellulose nitrate, polyamide, polyimide, polymeric amine, polyvinylidene difluoride, polyvinylidene fluoride, polysulfone, silicone rubber, and mixtures of these.

10. The method of claim 9, wherein the polymeric membrane is supported on a honeycomb structure having an inlet and outlet end face and a matrix of walls defining a plurality of cells or channels extending longitudinally and mutually parallel therethrough between the inlet and outlet end faces.

11. The method of claim 10, wherein the honeycomb structure comprises a group of cells which are open at the inlet end face and closed at the outlet end face of the structure, or vice versa, or open at both ends.

12. Use of the product obtained from the method of any of the preceding claims, for the separation of a gas mixture containing at least two components by dissolving at least one component in the polymeric membrane, and selectively diffusing the dissolved component through the membrane.
